## Europäisches Patentamt
## European Patent Office
## Office européen des brevets

(19)

(11) Veröffentlichungsnummer: **0 014 681**
**B1**

(12)

# EUROPÄISCHE PATENTSCHRIFT

(45) Veröffentlichungstag der Patentschrift:
16.06.82

(51) Int. Cl.³: **B 21 C 37/22**, F 28 F 19/00,
B 05 C 7/06

(21) Anmeldenummer: 80810029.1

(22) Anmeldetag: 29.01.80

(54) Verfahren und Vorrichtung zum Herstellen eines Lamellenwärmeaustauschers.

(30) Priorität: 01.02.79 CH 1001/79

(43) Veröffentlichungstag der Anmeldung:
20.08.80 Patentblatt 80/17

(45) Bekanntmachung des Hinweises auf die Patenterteilung:
16.06.82 Patentblatt 82/24

(84) Benannte Vertragsstaaten:
AT BE CH DE FR GB IT LU NL SE

(56) Entgegenhaltungen:
AU-B-1194/66
FR-A-670 726
FR-A-2 185 942
GB-A-558 124

(73) Patentinhaber: Schweizerische Aluminium AG,
CH-8212 Neuhausen am Rheinfall (CH)

(72) Erfinder: Mack, Karl, Schauinslandstrasse 26,
D-7700 Singen (DE)
Erfinder: Maly, Zdenek, Nationalstrasse 7,
CH-8280 Kreuzlingen (CH)

Verfahren und Vorrichtung zum Herstellen eines Lamellenwärmeaustauschers

Die Erfindung bezieht sich auf ein Verfahren und eine Vorrichtung zum Herstellen eines Lamellenwärmeaustauschers, bei dem in Öffnungen der Lamellen Rohre eingeschoben, die ringförmigen Hohlräume zwischen den Rohren und den Lamellen mit einer korrosionsschützenden, aushärtbaren Füllmasse ausgefüllt und die Rohre anschliessend aufgeweitet werden.

Zur Wärmeübertragung von einer Flüssigkeit auf Gas bzw. von Gas auf Flüssigkeit verwendet man sog. Rippenrohr- oder Lamellenwärmeaustauscher. Die weitaus häufigste Anwendung finden solche Geräte zur Wärmeübertragung von einer Flüssigkeit an Luft (Flüssigkeitskühler oder Lufterhitzer) oder von Luft an eine Flüssigkeit (Luftkühler, Verdampfer). Bei diesen Wärmeaustauschern sind die flüssigkeitsführenden Rohre aussen mit sog. Rippen oder Lamellen versehen, um so den naturgegebenen schlechteren Wärmeübergang auf der Luftseite durch eine Vergrösserung der wärmeübertragenden Fläche zu kompensieren.

Es gibt verschiedene Möglichkeiten, solche Wärmeaustauscher herzustellen. Weit verbreitet ist eine Bauart, bei der die Rippen aus Blechen bestehen, die auf die Kernrohre aufgereiht sind. Besonders geeignet hierzu sind Blechwerkstoffe mit hoher Wärmeleitfähigkeit, weil es mit diesen möglich ist, die Rippen relativ dünn auszuführen. Bei einer bekannten Bauart sind die einzelnen Rippen mehrerer Rohre zu dünnen Blechen – d.h. zu eigentlichen Lamellen – zusammengefasst. Diese grossflächigen Lamellen weisen eine der vorgesehenen Rohrzahl entsprechende Anzahl von Durchbrüchen auf. Auf diese Weise lässt sich ein kompakter Wärmeaustauscher aus Rohren und Lamellen zusammenfügen.

Bei dieser Wärmeaustauscherbauart ist die Güte der Verbindung zwischen den flüssigkeitsführenden Rohren und den Lamellen von ausschlaggebender Bedeutung, weil hiervon die Wärmeeinleitung in das Lamellenmaterial und damit die Leistung des Wärmeaustauschers abhängt.

Bei einer bewährten und wegen ihrer rationellen Herstellungsweise häufig verwendeten Klemmverbindung umschliesst ein aus der Lamelle selbst geformter, sogenannter Integralkragen das Rohr. Er dient gleichzeitig zur Wärmeeinleitung in die Lamelle und zur genauen Distanzhaltung zur nächstfolgenden Lamelle. Der feste Sitz der Kragen auf den Rohren wird durch Aufweiten der Rohre nach dem Zusammenbau des Wärmeaustauschers erreicht.

Bei dieser Rohr-Lamellenverbindung entstehen an der Stossstelle zwischen einer Lamelle und dem umgebördelten Integralkragen der nächstfolgenden Lamelle unvermeidlich ringförmige Hohlräume, weil es nicht möglich ist, den Radius der Biegekanten am Integralkragen derart zu verringern, dass eine scharfe Kante entsteht.

In diese ringförmigen Hohlräume kann unter ungünstigen atmosphärischen Verhältnissen Feuchtigkeit eindringen und es können sich korrosionsfördernde Stoffe ansammeln. Derartige Bedingungen begünstigen in den verhältnismässig kleinen Hohlräumen die Spaltkorrosion, welche bekanntlich einen intensiven Korrosionsangriff sowohl auf die Rohre wie auch auf die Lamellen zur Folge haben kann. Der lokalisierte Angriff bei der Spaltkorrosion kann im Laufe der Zeit zu einer Perforation der Rohre führen, was praktisch einer Zerstörung des Wärmeaustauschers gleichkommt.

Es sind nun verschiedene Verfahren bekannt, Wärmeaustauscher gegen diese Korrosionsart zu schützen. So können die Rohre und die Lamellen beispielsweise mit metallischen Überzügen, chemisch oder anodisch erzeugten Oxydschichten oder auch mit organischen Schutzschichten versehen werden. Die Kosten der hierzu notwendigen Verfahren sind aber nicht unerheblich und führen im allgemeinen zu einer beträchtlichen Verteuerung der Geräte. Im Falle einer organischen Beschichtung stellt die Schicht zudem wegen ihrer geringen Wärmeleitfähigkeit eine Barriere für den Wärmedurchgang zwischen Rohr und Lamelle dar, so dass es schon bei relativ geringer Schichtdicke zu einer fühlbaren Minderleistung des Wärmeaustauschers kommt, die durch eine entsprechende Vergrösserung der Lamellenfläche wieder ausgeglichen werden muss.

Durch eine beim Zusammenbau des Wärmeaustauschers noch flüssige oder viskose Beschichtung der Rohre lässt sich dieser Nachteil eines schlechten Wärmedurchgangs vermeiden, da beim Aufweiten der Rohre das Beschichtungsmaterial in die ringförmigen Hohlräume verdrängt wird. Eine neue Schwierigkeit ergibt sich aber dadurch, dass beim Einstossen der Rohre das Beschichtungsmaterial an den Lamellendurchbrüchen gegen die Einstossrichtung abgestreift wird, so dass die für einen wirksamen Korrosionsschutz unbedingt erforderliche, vollständige Ausfüllung sämtlicher ringförmiger Hohlräume insbesondere bei Wärmeaustauschern mit grosser Rohrlänge nicht gewährleistet ist.

Der Erfindung liegt nun die Aufgabe zugrunde, ein Verfahren sowie eine Vorrichtung zu schaffen, welche auf einfache Weise das Ausfüllen der ringförmigen Hohlräume mit einer korrosionsschützenden Masse gestatten, ohne dass der Wärmeübergang zwischen Rohr und Lamellen behindert wird. Das Verfahren und die Vorrichtung sollen auch beim Zusammenbau von Wärmeaustauschern mit grosser Rohrlänge anwendbar sein.

Die Aufgabe wird erfindungsgemäss dadurch gelöst, dass

a) die noch flüssige Füllmasse in den zylindrischen Hohlraum einer Hülse zwischen zwei gleitend verschiebbare und gegenüber der Hohlraumwandung abdichtende Abschlussstücke eingebracht wird, wobei dieser Hohlraum den gleichen Durchmesser wie der durch die Kragen der für den Zusammenbau des Wärmeaustauschers zu einem Lamellenpaket aneinandergereihten Lamellen gebildete zylindrische Hohlraum aufweist,

b) die Hülse derart an das Lamellenpaket angelegt wird, dass ihre Achse mit der Achse des durch die Kragen der aneinandergereihten Lamellen gebildeten, zylindrischen Hohlraumes zusammenfällt,

c) die aus den beiden Abschlussstücken mit dazwischenliegender Füllmasse bestehende Einheit mittels des in das Lamellenpaket einzusetzenden Rohres aus dem zylindrischen Hohlraum der Hülse ausgestossen sowie durch den zylindrischen Hohlraum des Lamellenpaketes durchgeschoben wird.

Beim Durchschieben der aus den beiden Abschlussstücken mit dazwischenliegender Füllmasse bestehenden Einheit durch den zylindrischen Hohlraum des Lamellenpaketes übt das der Füllmasse in Durchstossrichtung vorgelagerte Abschlussstück einen gewissen Druck auf die Füllmasse aus, wodurch diese während des Durchschiebens gleichmässig in die ringförmigen Hohlräume eingedrückt wird. Durch das nachfolgende Abschlussstück wird die Füllmasse von den Lamellenkragen abgestreift, wobei nur ein dünner Film zurückbleibt.

Bei einer bevorzugten Durchführung des Verfahrens wird die aus den beiden Abschlussstücken mit dazwischenliegender Füllmasse bestehende Einheit nach dem Durchschieben durch den zylindrischen Hohlraum des Lamellenpaketes in einen auf der gegenüberliegenden Seite des Lamellenpaketes angelegten, zylindrischen Hohlraum eingeschoben. Nach dem Durchschieben des Rohres durch das Lamellenpaket befindet sich die Einheit mit nicht verbrauchter Füllmasse somit wieder in einem zylindrischen Hohlraum und ist nach dem Einfüllen neuer Füllmasse wieder einsatzbereit.

Beim Zusammenbau von Wärmeaustauschern mit grosser Rohrlänge ergeben sich keine Probleme; die Menge der Füllmasse wird entsprechend grösser gewählt.

Beim Aufweiten der in das Lamellenpaket eingeschobenen Rohre wird der auf den Lamellenkragen verbliebene, dünne Film zusätzlich in die ringförmigen Hohlräume verdrängt. Die Füllmasse in den Hohlräumen bewirkt neben der Korrosionsschutzwirkung zusätzlich eine Sicherung der Klemmverbindung zwischen Rohr und Lamellen gegen Lockerung.

Als Füllmasse geeignet sind Kunststoffe, die durch Mischung zweier Komponenten oder durch Wärmeeinwirkung aushärten. Im Falle einer warmaushärtenden Füllmasse erhält der ganze Wärmeaustauscher in einem Ofen die erforderliche Wärmebehandlung. Ist für den Wärmeaustauscher eine Schutzlackierung vorgesehen, so kann das Einbrennen des Lackes und die Aushärtung der Füllmasse gemeinsam in einem Arbeitsgang erfolgen.

Die erfindungsgemässe Vorrichtung zur Durchführung des Verfahrens besteht aus

a) einem Körper mit mindestens einem zylindrischen Hohlraum von gleichem Durchmesser wie die durch die Kragen der für den Zusammenbau des Wärmeaustauschers zu einem Lamellenpaket aneinandergereihten Lamellen gebildeten, zylindrischen Hohlräume,

b) einem im zylindrischen Hohlraum des Körpers gleitend verschiebbaren und gegenüber der zylindrischen Hohlraumwandung abdichtenden Dorn, und

c) einem im zylindrischen Hohlraum gleitend verschiebbaren und gegenüber der zylindrischen Hohlraumwandung abdichtenden Kolben, welcher dem Dorn unter Bildung eines zur Aufnahme der Füllmasse dienenden Hohlraumes variablen Volumens vorgelagert ist.

Bei einer vorteilhaften Ausbildungsform der erfindungsgemässen Vorrichtung ist der Dorn mit einem in der Achse des zylindrischen Hohlraumes liegenden Schaft versehen, auf welchem der Kolben gleitend verschiebbar und gegenüber diesem abdichtend aufgesetzt ist.

Als Abgleitsicherung kann an dem durch den Kolben durchgeführten Schaftende ein Anschlag angebracht sein.

Das Einbringen der Füllmasse in den zwischen Dorn und Kolben gebildeten Hohlraum kann über eine vorzugsweise mit einem Rückschlagventil ausgestattete Bohrung durch den Dorn erfolgen. Eine weitere Möglichkeit besteht darin, die Füllmasse durch eine vorzugsweise mit einem Rückschlagventil ausgestattete Bohrung durch den Körper einzubringen.

Zur besseren Abdichtung des Kolbens gegenüber der Wandung des durch die Lamellenkragen der aneinandergereihten Lamellen gebildeten, zylindrischen Hohlraumes sowie zur Einstellung des Schiebewiderstandes des Kolbens zur Erzeugung eines gewissen Druckes auf die Füllmasse wird der Kolben vorteilhafterweise mit einem Kolbenring versehen. Eine gute Abdichtung kann auch dadurch erzielt werden, dass der Kolben mit einer beispielsweise aus Gummi oder Leder gefertigten Manschette ausgestattet ist.

Das vom Kolben wegweisende Ende des Dornes kann zur besseren Führung des in das Lamellenpaketes einzuschiebenden Rohres kegelig ausgebildet und mit einem Anschlag versehen sein.

Der Körper zur Aufnahme der aus Kolben, Dorn und dazwischen liegender Füllmasse bestehenden Einheit kann eine Hülse sein. Für eine rationelle Serienfertigung von Wärmeaustauschern ist es jedoch von Vorteil, einen Block zu verwenden, welcher entsprechend der Anzahl und Lage der zylindrischen Hohlräume des Lamellenpaketes mit Bohrungen versehen ist.

Beim Zusammenbau eines Wäremaustauschers kann das Lamellenpaket zwischen zwei derartigen Blöcken fixiert werden, wobei die Blöcke gleichzeitig als Druckplatten zum Vorpressen des Lamellenpaketes dienen können. Durch ein gemeinsames Einbringen der Füllmasse in die in jeder Bohrung des Blocks vorhandenen, erfindungsgemässen Vorrichtungen wird eine rationelle Serienfertigung von Wärmeaustauschern ermöglicht. Nach dem Durchschieben sämtlicher Rohre durch das Lamellenpaket befinden sich die erfindungsgemässen Vorrichtungen in den Bohrungen des zweiten Blocks und sind nach dem Füllen mit neuer Füllmasse wieder einsatzbereit.

Die Erfindung wird nachstehend anhand von schematischen Zeichnungen näher erläutert. Es zeigt

Fig. 1 einen Lamellen-Wärmeaustauscher in perspektivischer Darstellung

Fig. 2 eine Teilansicht eines längs eines Rohres verlaufenden Schnittes durch einen Lamellen-Wärmeaustauscher

Fig. 3 einen Längsschnitt durch eine erfindungsgemässe Vorrichtung

Fig. 4a–c die Funktionsweise einer erfindungsgemässen Vorrichtung.

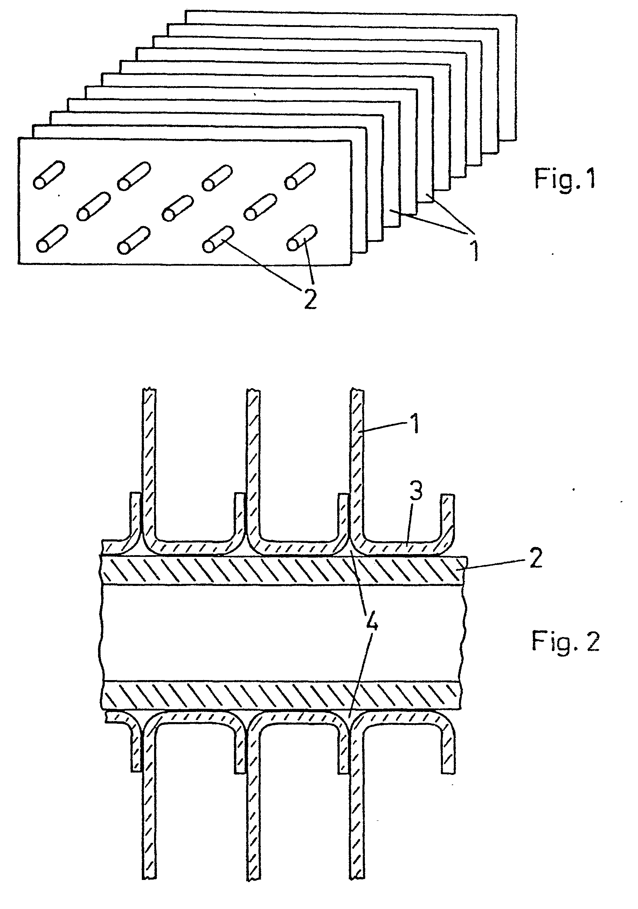

Beim Zusammenbau eines Lamellen-Wärmeaustauschers, wie er in Fig. 1 schematisch dargestellt ist, entstehen gemäss Fig. 2 zwischen den Kragen 3 der Lamellen 1 und den Rohren 2 kleine, ringförmige Hohlräume 4.

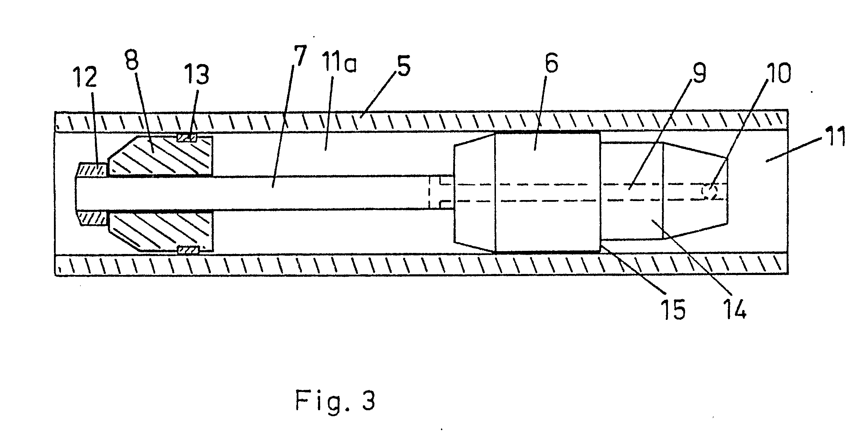

Eine erfindungsgemässe Vorrichtung zum Ausfüllen dieser Hohlräume 4 beim Zusammenbau eines Wärmeaustauschers ist in Fig. 3 dargestellt. In einer Hülse 5 befindet sich ein Dorn 6 mit einem Schaft 7, auf welchem ein Kolben 8 gleitend verschiebbar aufgesetzt ist.

Zum Auffüllen des Hohlraumes 11a zwischen Dorn 6 und Kolben 8 mit Füllmasse ist der Dorn 6 mit einer Bohrung 9 versehen, welche ein hier nicht im Detail gezeigtes Rückschlagventil 10 aufweist. Durch einen am Schaftende angebrachten Anschlag 12 wird der Kolben 8 beim Einbringen der Füllmasse gegen Abgleiten gesichert.

Der Kolben 8 trägt zur besseren Abdichtung und zur Einstellung des Schiebewiderstandes einen Kolbenring 13. Das vom Kolben 8 wegweisende Ende 14 des Dornes 6 ist zur besseren Führung des in das Lamellenpaket einzuschiebenden Rohres 2 kegelig ausgebildet und weist einen Anschlag 15 für das Rohr 2 auf.

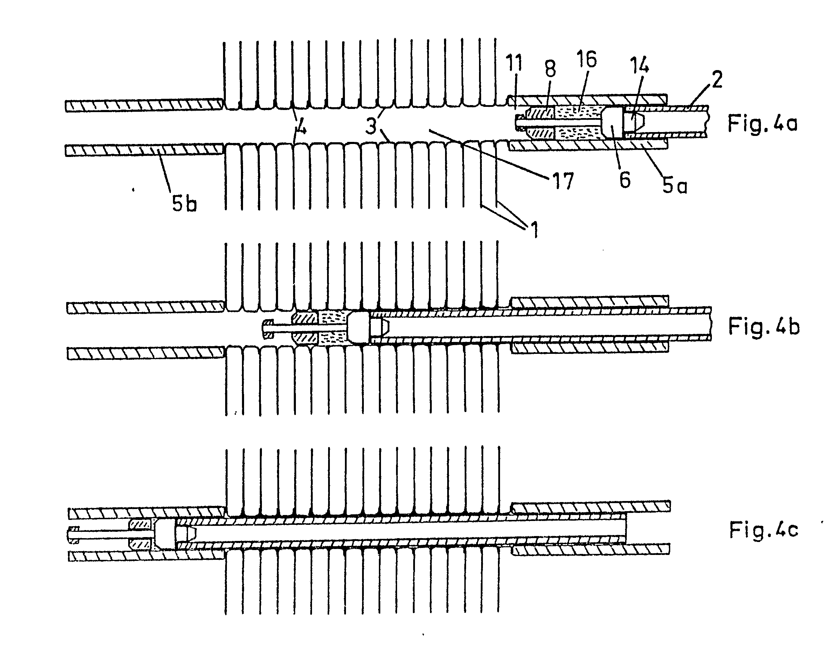

Die Funktionsweise der erfindungsgemässen Vorrichtung geht aus den Fig. 4a–c hervor.

In Fig. 4a ist die mit Füllmasse 16 aufgefüllte Vorrichtung derart an das Lamellenpaket angelegt, dass der zylindrische Hohlraum 11 der erfindungsgemässen Vorrichtung stufenlos in den durch die Kragen 3 der Lamellen 1 gebildeten Hohlraum 17 übergeht.

Mittels des auf das kegelig ausgebildete Ende 14 des Dornes 6 aufgesetzten Rohres 2 wird die aus Kolben 8 und Dorn 6 mit dazwischenliegender Füllmasse 16 bestehende Einheit aus der Hülse 5a ausgestossen, durch den zylindrischen Hohlraum 17 des Lamellenpaketes durchgeschoben (Fig. 4b) und in die auf der entgegengesetzten Seite des Lamellenpaketes angelegte Hülse 5b eingeschoben (Fig. 4c).

Beim Durchschieben der Einheit durch das Lamellenpaket wird durch den Schiebewiderstand des Kolbens 8 bzw. des Kolbenrings 13 ein gewisser Druck auf die Füllmasse 16 ausgeübt, so dass die Füllmasse 16 in die ringförmigen Hohlräume 4 eingepresst wird. Durch den Dorn 6 wird die Füllmasse 16 bis auf einen dünnen Film von den Lamellenkragen 3 abgestreift. Dieser dünne Film wird beim anschliessenden Aufweiten des in das Lamellenpaket eingeschobenen Rohres 2 zusätzlich in die ringförmigen Hohlräume 4 verdrängt.

Die gemäss Fig. 4c nach dem Durchschieben durch das Lamellenpaket in die Hülse 5b eingeschobene Einheit ist nach dem Ergänzen der verbrauchten Füllmasse wieder für den in den Fig. 4a–c dargestellten Verfahrensablauf einsatzbereit.

**Patentansprüche**

1. Verfahren zum Herstellen eines Lamellenwärmeaustauschers, bei dem in Öffnungen der Lamellen (1) Rohre (2) eingeschoben, die ringförmigen Hohlräume (4) zwischen den Rohren und den Lamellen mit einer korrosionsschützenden, aushärtbaren Füllmasse (16) ausgefüllt und die Rohre anschliessend aufgeweitet werden, dadurch gekennzeichnet, dass die noch flüssige Füllmasse (16) in den zylindrischen Hohlraum (11) einer Hülse (5) zwischen zwei gleitend verschiebbare und gegenüber der Hohlraumwandung abdichtende Abschlussstücke (6, 8) eingebracht wird, wobei dieser Hohlraum den gleichen Durchmesser wie der durch die Kragen (3) der für den Zusammenbau des Wärmeaustauschers zu einem Lamellenpaket aneinandergereihten Lamellen (1) gebildete zylindrische Hohlraum (17) aufweist, und die Hülse (5) derart an das Lamellenpaket angelegt wird, dass ihre Achse mit der Achse des durch die Kragen (3) der aneinandergereihten Lamellen (1) gebildeten, zylindrischen Hohlraumes (17) zusammenfällt, und dass die aus den beiden Abschlussstücken (6, 8) mit dazwischenliegender Füllmasse (16) bestehende Einheit mittels des in das Lamellenpaket einzusetzenden Rohres (2) aus dem zylindrischen Hohlraum (11) der Hülse (5) ausgestossen sowie durch den zylindrischen Hohlraum (17) des Lamellenpaketes durchgeschoben wird.

2. Verfahren nach Anspruch 1, dadurch gekennzeichnet, dass die aus den beiden Abschlussstücken (6, 8) mit dazwischenliegender Füllmasse (16) bestehende Einheit nach dem Durchschieben durch den zylindrischen Hohlraum (17) des Lamellenpaketes in einen auf der gegenüberliegenden Seite des Lamellenpaketes angelegten, zylindrischen Hohlraum eingeschoben wird.

3. Vorrichtung zum Ausfüllen der beim Zusammenbau von Lamellen-Wärmeaustauschern zwischen Rohr (2) und Lamellen (1) entstehenden, ringförmigen Hohlräume (4) mit einer korrosionsschützenden, aushärtbaren Füllmasse, gekennzeichnet durch

a) einen Körper (5) mit mindestens einem zylindrischen Hohlraum (11) von gleichem Durchmesser wie die durch die Kragen (3) der für den Zusammenbau des Wärmeaustauschers zu einem Lamellenpaket aneinandergereihten Lamellen (1) gebildeten, zylindrischen Hohlräume (17),

b) einen im zylindrischen Hohlraum (11) des Körpers (5) gleitend verschiebbaren und gegenüber der zylindrischen Hohlraumwandung abdichtenden Dorn (6), und

c) einen im zylindrischen Hohlraum (11) des Körpers (5) gleitend verschiebbaren und gegenüber der zylindrischen Hohlraumwandung abdichtenden Kolben (8), welcher dem Dorn (6) unter Bildung eines zur Aufnahme der flüssigen Füllmasse dienenden Hohlraumes (11a) variablen Volumens vorgelagert ist.

4. Vorrichtung nach Anspruch 3, dadurch gekennzeichnet, dass der Dorn (6) mit einem in der Achse des zylindrischen Hohlraumes (11) liegenden Schaft (7) versehen ist, auf welchem der Kolben (8) gleitend verschiebbar und gegenüber diesem abdichtend aufgesetzt ist.

5. Vorrichtung nach Anspruch 4, dadurch gekennzeichnet, dass an dem durch den Kolben (8) durchgeführten Schaftende ein Anschlag (12) als Abgleitsicherung für den Kolben (8) angebracht ist.

6. Vorrichtung nach einem der Ansprüche 3 bis 5, dadurch gekennzeichnet, dass der Dorn (6) zum Einbringen der Füllmasse in den zwischen Dorn (6) und Kolben (8) gebildeten Hohlraum (11a) eine vorzugsweise mit einem Rückschlagventil (10) versehene Bohrung (9) aufweist.

7. Vorrichtung nach einem der Ansprüche 3 bis 5, dadurch gekennzeichnet, dass der Körper (5) zum Einbringen der Füllmasse in den zwischen Dorn (6) und Kolben (8) gebildeten Hohlraum (11a) eine vorzugsweise mit einem Rückschlagventil versehene Bohrung aufweist.

8. Vorrichtung nach einem der Ansprüche 3 bis 7, dadurch gekennzeichnet, dass der Kolben (8) mit einem Kolbenring (13) versehen ist.

9. Vorrichtung nach einem der Ansprüche 3 bis 7, dadurch gekennzeichnet, dass der Kolben (8) mit einer Manschette versehen ist.

10. Vorrichtung nach einem der Ansprüche 3 bis 9, dadurch gekennzeichnet, dass das vom Kolben (8) wegweisende Ende (14) des Dornes (6) zur Führung des in das Lamellenpaket einzusetzenden Rohres (2) kegelig ausgebildet und mit einem Anschlag (15) versehen ist.

11. Vorrichtung nach einem der Ansprüche 3 bis 10, dadurch gekennzeichnet, dass der Körper (5) aus einer Hülse besteht.

12. Vorrichtung nach einem der Ansprüche 3 bis 10, dadurch gekennzeichnet, dass der Körper (5) aus einem entsprechend der Anzahl und Lage der zylindrischen Hohlräume (17) des Lamellenpaketes mit zylindrischen Bohrungen versehenen Block besteht.

## Revendications

1. Procédé de fabrication d'un échangeur thermique à lamelles, dans lequel des tubes (2) sont enfilés dans des ouvertures des lamelles (1), les volumes creux (4) de forme annulaire qui apparaissent entre les tubes et les lamelles sont remplis d'un produit de remplissage (16) qui durcit et protège de la corrosion, puis les tubes sont expansés, caractérisé en ce que le produit de remplissage (16) encore liquide est amené dans l'espace creux cylindrique (11) d'une douille (5) entre deux pièces d'obturation (6, 8) qui peuvent coulisser en glissant et assurent l'étanchéité à l'égard de la paroi du volume creux, ce volume creux présentant le même diamètre que le volume creux cylindrique (17) formé par les collets battus (3) des lamelles (1) empilées l'une contre l'autre pour constituer un paquet de lamelles pour le montage de l'échangeur thermique; et la douille (5) étant placée contre le paquet du lamelles, de façon que son axe coïncide avec l'axe du volume creux cylindrique (17) formé par les collets battus (3) des lamelles (1) empilées l'une contre l'autre; et en ce que l'ensemble constitué des deux pièces d'obturation (6, 8) avec le produit de remplissage (16) situé entre elles et poussé hors du volume creux cylindrique (11) de la douille (5) par le tube qu'il faut enfiler dans le paquet de lamelles et vient coulisser à travers le volume creux cylindrique (17) du paquet de lamelles.

2. Procédé selon la revendication 1, caractérisé en ce que l'ensemble constitué des deux pièces d'obturation (6, 8) et du produit de remplissage (16) situé entre elles, après avoir traversé le volume creux cylindrique (17) du paquet de lamelles, s'enfile dans un volume creux cylindrique placé côté opposé du paquet de lamelles.

3. Dispositif pour remplir les volumes creux annulaires (4) qui apparaissent entre le tube (2) et les lamelles (1) lors du montage des échangeurs thermiques à lamelles, avec un produit de remplissage qui peut durcir et qui protège de la corrosion, caractérisé par:

a) un corps (5) comportant au moins un volume creux cylindrique (11) du même diamètre que celui des volumes creux cylindriques (17) formés par les collets battus (3) des lamelles (1) empilées l'une contre l'autre pour former un paquet de lamelles pour le montage de l'échangeur thermique

b) une broche (6) qui peut coulisser en glissant dans le volume creux cylindrique (11) du corps (5) et assure l'étanchéité à l'égard de la paroi du volume creux cylindrique, et

c) un piston (8) qui peut coulisser en glissant dans le volume creux cylindrique (11) du corps (5), qui assure l'étanchéité à l'égard de la paroi du volume creux cylindrique et qui est placé en avant de la broche (6) en constituant un volume creux (11a) de volume variable, qui sert à recevoir le produit de remplissage liquide.

4. Dispositif selon la revendication 3, caractérisé en ce que la broche (6) comporte un arbre (7) placé dans l'axe du volume creux cylindrique (11) et sur lequel est monté le piston (8) avec possibilité de coulisser en glissant et en assurant l'étanchéité à l'égard de l'axe.

5. Dispositif selon la revendication 4, caractérisé en ce qu'à l'extrémité de l'arbre guidée à travers le piston (8) et rapportée une butée (12) qui sert de sécurité au glissement du piston (8).

6. Dispositif selon l'une des revendications 3 à 5, caractérisé en ce que la broche (6) comporte un alésage (9), de préférence muni d'un clapet anti-retour (10), pour amener le produit de remplissage dans le volume creux (11a) formé entre la broche (6) et le piston (8).

7. Dispositif selon l'une des revendications 3 à 5, caractérisé en ce que le corps (5) comporte un alésage, muni de préférence d'un clapet anti-retour pour amener le produit de remplissage dans le volume creux (11) formé entre la broche (6) et le piston (8).

8. Dispositif selon l'une des revendications 3 à 7, caractérisé en ce que le piston (8) comporte un segment (13).

9. Procédé selon l'une des revendications 3 à 7, caractérisé en ce que le piston (8) comporte une garniture.

10. Procédé selon l'une des revendications 3 à 9, caractérisé en ce que l'extrémité (14) de la broche (6), côté opposé au piston (8), est de forme conique pour le guidage du tube (2) à enfiler dans le paquet de lamelles et comporte une butée (15).

11. Dispositif selon l'une des revendications 3 à 10, caractérisé en ce que le corps (5) est constitué d'une douille.

12. Dispositif selon l'une des revendications 3 à 10, caractérisé en ce que le corps (5) est constitué d'un bloc comportant des alésages cylindriques correspondant au nombre et à la position des volumes creux cylindriques (17) du paquet de lamelles.

## Claims

1. Method of manufacture of a finned heat exchanger, in which tubes (2) are pushed into openings in the fins (1), the annular gaps between the tubes and the fins are filled with a hardenable filling material (16) protecting against corrosion, and thereafter the tubes are enlarged, characterised in that the filling material (16) while still liquid is introduced into the cylindrical cavity (11) of a sleeve (5) between two closure members (6, 8) which are slidingly displaceable and sealing against the cavity wall, while this cavity has the same diameter as the cylindrical cavity (17) formed by the collars (3) of the fins (1) which, for the assembly of the heat exchanger, are arranged in series as a stack of fins, and the sleeve (5) is applied to the stack of fins in such a way that its axis coincides with the axis of the cylindrical cavity (17) formed by the collars (3) of the fins (1) arranged in series, and that the unit consisting of the two closure members (6, 8) with filling material (16) lying between them is pushed out of the cylindrical cavity (11) of the sleeve (5) and through the cylindrical cavity (17) of the stack of fins, by means of the tube (2) to be inserted into the stack of fins.

2. Method according to claim 1, characterised in that the unit consisting of the two closure members (6, 8) with filling material (16) lying between them, after being pushed through the cylindrical cavity (17) of the stack of fins, is pushed into a cylindrical cavity applied to the opposite side of the stack of fins.

3. Device for filling up, with a hardenable filling material protecting against corrosion, of the annual cavity (4) arising during assembly of finned heat exchangers between tube (2) and fins (1), characterised by

a) a body (5) with at least one cylindrical cavity (11) of the same diameter as the cylindrical cavity (17) formed by the collars (3) of the fins (1) which, for the assembly of the heat exchanger, are arranged in series as a stack of fins,

b) a plug (6) slidingly displaceable in the cylindrical cavity (11) of the body (5) and sealing against the cylindrical cavity wall, and

c) a piston (8) slidingly displaceable in the cylindrical cavity (11) of the body (5) and sealing against the cylindrical cavity wall, which is arranged in front of the plug (6) with formation of a cavity (11a) of variable volume serving for reception of the liquid filling material.

4. Device according to claim 3, characterised in that the plug (6) is provided with a shaft (7) lying on the axis of the cylindrical cavity (11), on which the piston (8) is mounted to be slidingly displaceable and sealing against it.

5. Device according to claim 4, characterised in that an abutment (12) is applied on the shaft end passing through the piston (8) as a means of preventing escape of the piston (8).

6. Device according to one of claims 3 to 5, characterised in that, for introduction of the filling material into the cavity (11a) formed between plug (6) and piston (8), the plug (6) has a bore (9), preferably provided with a non-return valve (10).

7. Device according to one of the claims 3 to 5, characterised in that, for introduction of the filling material into the cavity (11a) formed between plug (6) and piston (8), the body (5) has a bore, preferably provided with a non-return valve.

8. Device according to one of claims 3 to 7, characterised in that the piston (8) is provided with a piston ring (13).

9. Device according to one of claims 3 to 7, characterised in that the piston (8) is provided with a sealing cup.

10. Device according to one of claims 3 to 9, characterised in that the end (14) of the plug (6) directed away from the piston (8) is formed conical for guiding of the tube (2) to be introduced into the stack of fins, and is provided with a stop (15).

11. Device according to one of claims 3 to 10, characterised in that the piston (5) consists of a sleeve.

12. Device according to one of claims 3 to 10, characterised in that the piston (5) consists of a block provided with cylindrical bores corresponding with the number and position of the cylindrical cavities (17) of the stack of fins.

- 1/3-

Fig. 1

Fig. 2

Fig. 3

Fig. 4a

Fig. 4b

Fig. 4c

11    3/3    0 014 681